**Europäisches Patentamt**

**European Patent Office**

**Office européen des brevets**

(11) Veröffentlichungsnummer: **0 267 563**
**A2**

## (12) EUROPÄISCHE PATENTANMELDUNG

(21) Anmeldenummer: **87116503.1**

(22) Anmeldetag: **09.11.87**

(51) Int. Cl.4: **C09D 5/44**

(30) Priorität: **14.11.86 AT 3028/86**

(43) Veröffentlichungstag der Anmeldung:
**18.05.88 Patentblatt 88/20**

(84) Benannte Vertragsstaaten:
**BE CH DE ES FR GB IT LI NL SE**

(71) Anmelder: **Vianova Kunstharz Aktiengesellschaft**

**A-8402 Werndorf(AT)**

(72) Erfinder: **Zima, Herbert, Dr. Chem.**
**Eichenweg 7**
**A-8042 Graz(AT)**
Erfinder: **Forstner, Josef, Dipl.-Ing.**
**Alte Reichsstrasse 37**
**A-8410 Wildon(AT)**

(74) Vertreter: **Pitter, Robert, Dr. et al**
**Leechgasse 21 Postfach 191**
**A-8010 Graz(AT)**

(54) **Verfahren zur Herstellung von Bindemitteln auf Acrylatbasis in kathodisch abscheidbaren Lacken und deren Verwendung.**

(57) Die Erfindung betrifft ein Verfahren zur Herstellung von Bindemitteln auf Acrylatbase für kathodisch abscheidbare Lacke, welche insbesonders zur Formulierung von dekorativen Einschichtlacken oder hellfarbigen Grundierungen geeignet sind. Die Bindemittel sind nach Protonierung wassverdünnbare, partielle Kondensationsprodukte von 60 - 90 Gew.-% eines Hydroxyl-und Aminogruppen tragenden Acrylcopolymerisates, dessen basische Gruppen durch Umsetzung von Glycidylgruppen mit sekundären Aminen erhalten wurden, mit 10 - 40 Gew.-% einer C-H-aktive Estergruppen, vorzugsweise Malonestergruppen enthaltenden, zur Umesterung und/oder Umamidierung befähigten oligomeren oder polymeren Verbindung.

Die Lackfilme zeichnen sich durch besondere Gilbungsfestigkeit, Waschlaugenbeständigkeit und Abriebfestigkeit aus.

EP 0 267 563 A2

## Verfahren zur Herstellung von Bindemitteln auf Acrylatbasis in kathodisch abscheidbaren Lacken und deren Verwendung

Die Erfindung betrifft ein Verfahren zur Herstellung von Bindemitteln auf Acrylatbasis für kathodisch abscheidbare Lacke , welche insbesonders zur Formulierung von dekorativen Einschichtlacken oder hellfarbigen Grundierungen geeignet sind. Die Bindemittel sind, nach Protonierung wasserverdünnbare, partielle Kondensationsprodukte von Hydroxyl-und Aminogruppen tragenden Acrylcopolymerisaten mit einer C-H-aktive Estergruppen, vorzugsweise Malonestergruppen enthaltenden, zur Umesterung und/oder Umamidierung befähigten oligomeren oder polymeren Verbindung.

Für die Formulierung von kathodisch abscheidbaren dekorativen Einschichtlacken geeignete Bindemittel werden beispielsweise in der DE-OS 23 25 177 beschrieben, wobei Glycidylgruppen tragende Acrylcopolymere nachträglich mit 0,1 bis 1,0 Äquivalenten eines sekundären Amines pro Äquivalent Glycidylgruppen umgesetzt werden. Diese Bindemittel vernetzten im wesentlichen über die nichtumgesetzten Glycidylgruppen. Diese Gruppen zeigen jedoch in der wäßrigen Lösung keine ausreichende Stabilität, wodurch die Härtungstendenz im Laufe der Zeit abnimmt und die Lacke unbrachbar werden.

Die Verwendung von Vernetzungskomponenten auf der Basis von $\beta$-Hydroxyalkyl-estergruppen enthalten Verbindungen zur Härtung von Aminaddukten von Glycidylgruppen tragenden Copolymeren ist aus der EP-AI-01 31 125 bekannt.

In der AT-PS 372 099 ist die Verwendung von Malonsäureestern als Härtungskomponente für kationische Bindemittel beschrieben, wobei auch auf die Verwendbarkeit von kationsiche Gruppen enthaltenden Copolymerisaten hingewiesen ist.

Eine andere Gruppe von Vernetzungskomponente, welche Umesterungs-oder Umamidierungsreaktionen von Malonsäureestern ausnützen, sind in der AT-PS 379 602 beschrieben. Dabei werden C-H-acide Verbindungen, die mindestens eine Estergruppe aufweisen, mit einer Carbonylverbindung im Sinne einer KNOEVENAGEL-Reaktion umgesetzt und die entstehende alpha-disubstituierte Alkylidenverbindung zu einer oligomeren Verbindung mit einem Molekulargewicht zwischen 300 und 6000 polymerisiert. Die Härtungskomponente kann gegebenenfalls auch partielle mit dem Basisharz vorkondensiert werden.

Soferne gemäß den Literaturstellen die Härtungskomponenten den Polymeren nur zugemischt werden, hat es sich gezeigt, daß bei Verwendung von Acrylcopolymeren als Basisharze, wahrscheinlich aufgrund einer starken Unverträglichkeit, bereits nach kurzer Lagerzeit sowohl bei Harzmischungen als auch bei Pigmentpasten Entmischungserscheinungen auftreten. Eine ausreichende Redispergierung ist nur mit großem Aufwand möglich, wobei auch dann die Oberflächenstörungen der Filme meist nicht mehr behoben werden können.

Es wurde nun gefunden, daß man Bindemittel auf Acrylatbasis, welche durch Umsetzung oder Umamidierung vernetzt und für kathodisch abscheidbare Lacke verwendet werden, mit ausgezeichneten Eigenschaften erhält, wenn man besonders ausgewählte Bindemittelkomponenten einsetzt.

Die vorliegende Erfindung betrifft dementsprechend ein Verfahren zur Herstellung von Bindemitteln für kathodisch abscheidbare Lacke, auf Basis von nach Protonierung wasserverdünnbaren und durch Umsetzung oder Umamidierung vernetzbaren Acrylcopolymeren, welches dadurch gekennzeichnet ist, daß man

(A) 60 - 90 Gew.-%, vorzugsweise 75 bis 85 Gew.-%, eines epoxidgruppenfreien Aminadduktes eines Glycidylgruppen und gegebenenfalls primäre Hydroxylgruppen tragenden Acrylatcopolymeren, wobei die Menge des eingesetzten sekundären Amins so gewählt wird, daß das Verhältnis zwischen den ursprünglichen Glycidylgruppen und den sekundären Aminogruppen zwischen 1 : 0,7 und 1 : 1 liegt und das Endprodukt eine die Wasserverdünnbarkeit des Produktes nach Protonierung gewährleistende Aminzahl von 35 bis 140 mg KOH/g, vorzugsweise von 80 bis 110 mg KOH/g, und welches eine, vorzugsweise auf primären Hydroxylgruppen beruhende, Hydroxylzahl von 100 bis 250 mg KOH/g, vorzugsweise von 130 bis 180 mg KOH/g, oder ganz oder anteilig primäre Aminogruppen in einer der Hydroxyzahl äquivalenten Menge aufweist, mit

(B) 10 bis 40 Gew.-%, vorzugsweise 15 bis 25 Gew.-%, einer C-H-aktive Estergruppen, vorzugsweise Malonestergruppen enthaltenden, zur Umesterung und/oder Umamidierung befähigten oligomeren oder polymeren Verbindung bei 100 bis 120°C bis zu einer Grenzviskositätszahl zwischen 8 und 18 ml/g, vorzugsweise zwischen 9 und 15 ml/g, gemessen in CHCl₃ bei 20°C partiell kondensiert, mit der Maßgabe, daß die Grenzviskositätszahlen der Ausgangsmischung und des Kondensationsproduktes, gemessen in CHCl₃ bei 20°C, sich wie 1 : 1 bis 1 : 1,5, vorzugsweise wie 1 : 1,01 bis 1 : 1,25, verhalten und die Grenze einer einwandfreien Löslichkeit des protonierten Kondensationsproduktes nicht überschritten wird.

Die Erfindung betrifft weiters die erfindungsgemäß hergestellten Bindemittel und deren Verwendung in kathodisch abscheidbaren Lacken für dekorative, pigmentierte oder nichtpigmentierte Einschichtlackierungen und helle Grundierungen auf metallischen Untergründen.

Die aus den erfindungsgemäßen hergestellten Bindemitteln formulierten, kathodisch abscheidbaren Lacke sind insbesonders für dekorative Einschichtlackierungen, wie sie bei der Serienlackierung von Haushaltsgeräten, Leuchten, Heizkörpern und ähnlichen Objekten, bei welchen besonderer Wert auf Gilbungsfestigkeit der weißen oder hellfarbigen Überzüge gelegt wird, eingesetzt werden, geeignet. Aufgrund ihrer guten Waschlaugenbeständigkeit sind die Produkte auch für Waschmaschinenlacke und Kühlschranklacke geeignet. Entsprechend pigmentierte Lacke können auch für die Beschichtung von Kraftfahrzeugzubehör, wie Felgen, Scheibenwischer u. ä. sowie für Teile von Landmaschinen verwendet werden. Weiters können die Lacke als helle Grundierungen verwendet werden.

Als Klarlackbeschichtungen dienen sie zur Beschichtung von galvanisch überzogenen Substraten, wodurch sowohl der optische Aspekt, wie auch die Beständigkeitseigenschaften wesentlich verbessert werden. Klarlackbeschichtungen zur Vermeidung des Abriebs von Metallbeschichtungen werden auch bei Schmuckstücken, Beschlägen, Armaturen u. ä. eingesetzt. Zur Erzielung besonderer Effekte werden dieses Klarlacke auch mit nichtdeckenden Pigmenten verarbeitet (Transparenzfarben).

Die Glycidylgruppen aufweisenden Acrylcopolymerisate werden in der üblichen Weise nach den Methoden der Lösungspolymerisation hergestellt. Als Monomere werden neben dem Glycidyl(meth)acrylat und gegebenenfalls Hydroxyalkyl(meth)acrylaten, Alkyl(meth)acrylate mit $C_1$ bis $C_{13}$-Alkylresten eingestzt. Daneben können auch Vinylaromaten, insbesondere Styrol, mitverwendet werden.

Als Lösemittel für die Polymerisation werden Glykolether wie Ethoxy-oder Butoxyethanol, vorzugsweise Methoxypropanol, eingesetzt.

Die Glycidylgruppen der Copolymeren werden anschließend bei 90 bis 95 C mit sekundären Aminen umgesetzt. Vorzugsweise erfolgt die Umsetzung mit Dialkanolaminen, wie Diethanolamin oder Dipropanolamin, durch welche für die Vernetzung günstige primäre Hydroxylgruppen in das Polymere eingeführt werden.

Für die Vernetzung durch Umamidierung brauchbare primäre Aminogruppen können auch über primärsekundäre Polyamine, deren primäre Aminogruppen als Ketimine blockiert sind, eingebaut werden. Ein bekanntes Amin dieser Art ist beispielsweise das Umsetzungsprodukt von Diethylentriamin mit 2 Mol eines Ketons.

Die Aminokomponente wird in einer Menge eingesetzt, daß das molare Verhältnis zwischen den Glycidylgruppen des Copolymeren und den sekundären Aminogruppen 1 : 0,7 bis 1 : 1 beträgt. Es hat sich gezeigt, daß trotz der Nichtäquivalenz der regierenden Gruppen Produkte erhalten werden, welche keine freien Glycidylgruppen aufweisen. Wird ein molares Verhältnis außerhalb dieser Grenzen gewählt, so treten bereits bei Abweichungen von etwa 10 % deutlich die üblichen Störungen durch freie Glycidylgruppen (Mängel in der Stabilität) bzw. durch freie Aminsalze im Badmaterial (Filmdefekte in den abgeschiedenen Überzügen) auf.

Als weiteres Kriterium für die Menge der Aminkomponente gilt, daß das Bindemittel nach Protonierung in Wasser einwandfrei lösliche sein muß, d. h. mindestens 24 Stunden als 15%ige wäßrige Lösung keine Separationserscheinungen zeigen darf. Die Aminmenge wird deshalb so gewählt, daß das Endprodukt eine Aminzahl von 35 mg KOH/g bis 140 mg KOH/g aufweist. Der bevorzugte Bereich für die Aminzahl liegt zwischen 80 mg KOH/g und 110 mg KOH/g.

Zur Gewährleistung einer einwandfreien Vernetzung durch Umesterung oder Umamidierung mit den Estergruppen der Härterkomponente weisen die Copolymerisate eine, vorzugsweise auf primären Hydroxylgruppen beruhende, Hydroxylzahl von 100 bis 250 mg KOH/g, vorzugsweise von 130 bis 180 mg KOH/g, auf. Die Hydroxylgruppen können gegebenenfalls vollständig oder anteilig durch eine äquivalente Menge primärer Aminogruppen ersetzt sein.

Die Härterkomponente besteht aus einem C-H-aktive Estergruppen, vorzugsweise Malonestergruppen enthaltenden, Oligomeren oder Polymeren. Die Herstellung von Produkten dieser Art sind in der AT-PS 372 099 und der AT-PS 379 602 beschrieben. Vorzugsweise werden Malonesterabkömmlinge eingesetzt, wie sie in einer nicht zum Stand der Technik gehörenden Anmeldung (AT-A 1235/86, 2850/2311, bekanntgemacht am 15. 4. 1987) beschrieben werden. Es handelt sich dabei um KNOEVENAGEL-Reaktionsprodukte aus C-H-aktiven Estern und einer Carbonylverbindung, wobei die Reaktionsprodukte durch partielle Umesterung mit Di-oder Polyolen umgesetzt werden. Ganz besonders bevorzugt sind Härterkomponenten, welche aus Diethylmalonat, Formaldehyd und 30 bis 40 Molprozent Propylenglykol-1,3-hergestellt sind.

In einer modifizierten Arbeitsweise können die Copolymerisat-Aminaddukte auch durch vorherige Umsetzung des Glycidyl(meth)acrylats mit dem Amin und anschließende Copolymerisation erhalten werden. Für die Umsetzung mit dem Amin wird das Glycidylmonomere zur Vermeidung einer Polymerisationsreaktion vorteilhafterweise mit geeigneten Polymerisationsinhibitoren, wie Hydrochinon, versetzt. Die weitere Polymerisation erfolgt in üblicher Weise in Gegenwert von Lösemitteln und radikalischen Initiatoren.

Das Polymere wird bei 100 bis 120 C mit der Vernetzungskomponente partiell kondensiert, wobei dafür Sorge getragen werden muß, daß die Grenze der Löslichkeit des protonierten Kondensationsproduktes in Wasser nicht überschritten wird. Üblicherweise ist die Kondensation nach etwa 2 bis 6 Stunden beendet.

Als Kriterium für den gewünschten Kondensationsgrad gilt der Anstieg der Grenzviskositätszahl (gemessen in CHCl₃ bei 20 C). Zur Erzielung der gewünschten Eigenschaften soll die Grenzviskositätszahl des Kondensationsproduktes auf den Endwert von 8 bis 18 ml/g ansteigen. Der bevorzugte Bereich liegt bei 9 bis 15 ml/g. Das Verhältnis der Grenzviskositätszahlen der Ausgangsmischung und des Kondensationsproduktes, gemessen in CHCl₃ bei 20 C, muß sich dabei wie 1 : 1 bis 1 : 1,5, vorzugsweise wie 1 : 1,01 bis 1 : 1,25, verhalten.

Die Komponenten werden in Verhältnissen von 60 bis 90 Gew.-% des Polymeren und 10 bis 40 Gew.-% der Härterkomponente eingesetzt. Der bevorzugte Bereich liegt bei 75 bis 85 Gew.-% des Polymeren und 15 bis 25 Gew.-% des Härters.

Die Bindemittel werden in bekannter Weise durch teilweise oder vollständige Neutralisation mit organischen und/oder anorganischen Säuren, vorzugsweise Ameisensäure, Essigsäure oder Milchsäure, in die wasserverdünnbare Salzform überführt.

Die Methoden der Lackherstellung und der Applikation nach dem ETL-Verfahren sind dem Fachmann bekannt und bedürfen keiner weiteren Erläuterungen. Eine vorteilhafte Methode ist in den folgenden Anwendungsbeispielen beschrieben.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.


## (A) Herstellung der Copolymerisat-Amin-Addukte (Komponente A)

### Komponente A 1:

In einem mit Rückflußkühler, Zugabegefäß, Thermometer, Inertgaseinleitung, Heizung und Kühlung sowie Rührwerk ausgestatteten Reaktionsgefäß werden unter Inertgasabdeckung 40 Tle Methoxypropanol und 2 Tle Azodiisobuttersäuredinitril vorgelet und auf 85 C erwärmt. Aus dem Zugabegefäß wird eine Mischung aus 40 Tlen Glycidylmethacrylat, 20 Tlen Methylmethacrylat, 40 Tlen 2-Ethylhexylacrylat und 2 Tlen Azodiisobuttersäuredinitril (ABN) in 2 Stunden zugegeben und dann 3 Stunden bei 85 C ausreagiert. Schließlich wird eine Lösung von 28 Tlen Diisopropanolamin in 36 Tlen Methoxypropanol zugegeben und 4 Stunden auf 90 -95 erwärmt. Man erhält eine 62%ige Harzlösung.
Kennzahlen des Produktes:
Glycidylgruppen-Aminogruppen-Verhältnis : 1 : 0,75
Hydroxyzahl (Gesamt/prim.OH): 275 / 185 mg KOH/g.
Aminzahl: 92 mg KOH/g


### Komponente A 2:

Die Herstellung erfolgt in gleicher Weise wie Komponente A 1 mit dem Unterschied, daß das Methylmethacrylat durch die gleiche Menge Styrol ersetzt wird. Kennzahlen des Produktes:
G - A-Verhältnis: 1 : 0,75
Hydroxylzahl (Gesamt/prim.OH) : 275 / 185 mg KOH/g
Aminzahl: 92 mg KOH/g


### Komponente A 3:

In der oben beschriebenen Apparatur werden 40 Tle Methoxypropanol und 2 Tle ABN unter Inertgas auf 85 C erwärmt. Innerhalb von 2 Stunden wird eine Mischung aus 30 Tlen Glcyidylmethacrylat, 24 Tlen Methylmethacrylat, 46 Tlen 2-Ethylhexylacrylat und 2 Tlen ABN gleichmäßig zugegeben. 3 Stunden nach Ende der Zugabe wird die Temperatur auf 90 bis 95 C erhöht, eine Lösung von 28 Tlen Diisopropanolamin in 36 Tlen Methoxypropanol zugegeben und 4 Stunden bei 95 C reagiert.

Kennzahlen des Produktes:
G-A-Verhältnis : 1 : 1
Hydroxyzahl (Gesamt/prim. OH): 214 / 143 mg KOH/g
Aminzahl: 92 mg KOH/g

## Komponente A 4:

In der oben beschriebenen Apparatur weden 11 Tle Diisopropanolamin und 6 Tle Methoxypropanol auf 50 C erwärmt und innerhalb von 4 Stunden mit 13 Tlen Glycidylmethacrylat, welches mit 125 ppm Hydrochinon stabilisiert wurde, versetzt. Die Temperatur wird zur Vervollständigung der Reaktion noch 2 Stunden gehalten. In einer weiteren Apparatus werden 48 Tle Methoxypropanol und 2 Tle ABN unter Inertgas auf 85 C erwärmt und innerhalb von 2 Stunden eine Mischung von 30 Tlen des oben hergestellten Vorproduktes, 11 Tlen 2-Hydroxypropylmethacrylat, 20 Tlen Methylmethacrylat, 40 Tlen 2-Ethylhexylacrylat und 2 Tlen ABN gleichmäßig zugegeben. Nach Ende der Zugabe wird die Temperatur weitere 6 Stunden gehalten, wobei nach ca. 3 Stunden 0,3 Tle ABN zugegeben werden. Man erhält eine 63%ige Harzlösung.
Kennzahlen des Produktes:
G-A-Verhältnis: 1 : 0,9
Hydroxyzahl (Gesamt/prim.OH): 245 / 115 mg KOH/g
Aminzahl: 49 mg KOH/g

## (B) Herstellung der Härterkomponenten (Komponente B)

## Komponente B 1:

Aus den in der Tabelle 1 angegebenen Rohstoffen werden in nachstehend beschriebener Weise die Vernetzungskomponenten hergestellt:
In einem geeigneten Reaktionsgefäß mit einer für das Azeotropverfahren geeigneten Einrichtung und einer Glockenbodenkolonne zur Abtrennung der bei der partiellen Umesterung gebildeten Alkoholkomponente wird zu einer Mischung aus der Esterkomponente und der Katalysatormischung (je 0,5 bis 1,0 Mol-%, bezogen auf Ester, von Piperidin und Ameisensäure) bei 70 bis 80°C portionsweise der Paraformaldehyd zugegeben, ohne daß die Temperatur durch die exotherme Reaktion max. 90°C überschreitet. Diese Temperatur wird gehalten, bis der Paraformaldehyd vollständig gelöst ist. Anschließend wird die Temperatur langsam auf 110 bis 120°C erhöht und das gebildete Reaktionswasser mit Hilfe eines geeigneten Schleppmittels aus dem Reaktionsgemisch entfernt. Nach Entfernen des Schleppmittels durch Anlegen eines Vakuums wird die Polyolkomponenten zugegeben und die Temperatur bis zum Einsetzen der Destillation (ca. 140 bis 180°C) erhöht. Die erhaltenen Reaktionsprodukte weisen Festharzgehalte (120°C, 30 Minuten) zwischen 90 und 96 % auf.

Tabelle 1

| | B 1 | B 2 | B 3 | B 4 | B 5 |
|---|---|---|---|---|---|
| MOL DIESTER | 1 MDE | 1 MDE | 1 MDE | 1 MDE | 1 MDE |
| MOL $CH_2O$ | 0,5 | 0,5 | 0,5 | 0,5 | 0,5 |
| MOL POLYOL | 0,3 PG | 0,4 NPG | 0,4 D | 0,4 BD | 0,4 HD |
| ESTERÄQUIVALENTE | 97 | 84 | 98 | 81 | 87 |
| OH-ZAHL mg KOH/g | unter 5 | unter 5 | 5 | 13 | 9 |
| GRENZVISKOSI-TÄTSZAHL DMF/20°C | 3,5 | 3,5 | 8,0 | 6,8 | 6,6 |
| BRECHUNGSINDEX n 20/D | 1,4600 | 1,4515 | 1,4990 | 1,4629 | 1,4623 |

MDE  Malonsäurediethylester
PG  Propylenglykol-1,2
NPG  Neopentylglykol
D  1,1'-Isopropyliden-bis-(p-phenylenoxy)-diethanol-2
BD  Butandiol-1,4
HD  Hexandiol-1,6

Tabelle 2

| | C 1 | C 2 | C 3 | C 4 | C 5 | C 6 | C 7 | C 8 |
|---|---|---|---|---|---|---|---|---|
| Komp. (A) | A 3 | A 4 | A 1 | A 1 | A 1 | A 1 | A 1 | A 2 |
| Komp. (B) | B 1 | B 1 | B 1 | B 2 | B 3 | B 4 | B 5 | B 4 |
| Gew.-Verhältnis (A) : (B) (Festharz) | 80:20 | 80:20 | 85:15 | 65:35 | 70:30 | 80:20 | 85:15 | 80:20 |
| Reaktionszeit bei 110°C (Stden) | 4 | 4 | 10 | 2 | 4 | 4 | 4 | 4 |
| Grennzviskositätszahl $CHCl_3/20°C$ (a) vor Kondensation | 11,3 | 10,2 | 12 | 9,1 | 12 | 12,2 | 12,2 | 10,8 |
| (b) nach Kondensation | 12,4 | 10,4 | 15 | 10,6 | 13,2 | 14,6 | 13,4 | 13,2 |
| Verhältnis (a) : (b) | 1:1,1 | 1:1,02 | 1:1,25 | 1:1,16 | 1:1,1 | 1:1,2 | 1:1,1 | 1:1,22 |
| Festkörpergehalt % | 66 | 66 | 67 | 73 | 70 | 68 | 66 | 68 |
| Wasserlöslichkeit (1) | i.O. | i.O. | i.O. | i.O. | i.O. | i.O. | i.O. | i.O. |

(1) nach Zugabe von 40 mMol HCOOH/100 g Festharz
    i.O. = einwandfrei

Beispiele 1 bis 8

Für die Partialkondensation werden die Komponenten in den in der Tabelle 2 angegebenen Verhältnissen und Bedingungen reagiert. Die Kennzahlen der Reaktionsprodukte sind ebenfalls der Tabelle 2 zu entnehmen.

Prüfung der aus den erfindungsgemäß hergestellten Bindemitteln formulierten Lacke

Aus den gemäß Beispielen 1 bis 8 hergestellten Bindemitteln werden Weißlacke und Badmaterialien für die elektrische Abscheidung hergestellt.

Die mit V bezeichneten Lacke sind Vergleichslacke, bei denen die Komponenten (A) und (B) durch 30minütiges Rühren bei Zimmertemperatur gemischt wurden.

Dabei werden auf einem Dreiwalzenaggregat in bekannter Weise Lacke gemäß folgender Rezeptur hergestellt:

120 Tle Harz (Festharz)
60 Tle Titandioxid
4 Tle Bleioctoat, 30 %
7,5 Tle Ameisensäure, 5 N (30 mMol/100 g FH)

Der Ansatz wird mit deionisiertem Wasser auf einen Festkörpergehalt von 18 % verdünnt. Vor der Abscheidung wird das Badmaterial 24 Stunden bei Zimmertemperatur homogenisiert.

Die Abscheidung erfolgt in bekannter Weise auf zinkphosphatiertem Stahlblech, wobei die Bedingungen so gewählt werden, daß nach dem Einbrennen (30 Minuten/160 bzw. 180 C) ein Film mit einer Stärke von 18 ± 2μm resultiert.

Die mit diesen Lacken erzielten Prüfergebnisse sind in der Tabelle 3 zusammengefaßt. Die Prüfungen erfolgten in folgender Weise.

Waschlaugentest: Eine 1%ige Lösung eines Haushaltsvollwaschmittels wird auf 76 C erwärmt. Das Prüfblech wird 8 Stunden bei dieser Temperatur in der Lösung belassen. Dann wird die Heizung für weitere 16 Stunden abgeschaltet (= 1 Zyklus). Der Test wird beendet, wenn entweder der Film erweicht ist oder Bläschen auftreten.

NaOH-Test: Das Blech wird in einer 5%igen Natronlauge bei 40 C so lange gelagert, bis Bläschenbildung auftritt.

Salzsprühbeständigkeit: ASTM B 117 - 64
Tiefung nach ERICHSEN: DIN 53 156
Gitterschnitt: DIN 53 151
Kantendeckung, Gilbung: visuell

Glanz: gemessen mit GONIOREFLEKTOMETER GR-COMP. (Paar, Österr.); Meßwinkel 60 , % vom Standard

Tabelle 3 (Prüfergebnisse)

| Bindemittel-kombination | Waschlaugen-test /Zyklen | NaOH/5 % in Std.en. | Salzsprüh-beständigkeit in Stden. | Erichsen-tiefung/mm | Gitter-schnitt | Kanten-deckung | Glanz 60 | Vergilbung % |
|---|---|---|---|---|---|---|---|---|
| 1 | 23 | 104 | 360 | 8,2 | 1 | 1.0. | 70 | 1.0. |
| 1 (V) | 8 | 24 | 240 | 8,3 | 1 - 2 | 1.0. | 65 | 1.0. |
| 2 | 12 | 48 | 120 | 7,0 | 0 - 1 | 1.0. | 75 | 1.0. |
| 2 (V) | 0,5 | 1 | 120 | 6,8 | 1 | 1.0. | 70 | 1.0. |
| 3 | 12 | 36 | 500 | 5,2 | 1 - 2 | 1.0. | 75 | 1.0. |
| 3 (V) | 8 | 18 | 360 | 5,8 | 1 | 1.0. | 60 | 1.0. |
| 4 | 12 | 60 | 180 | 7,5 | 0 - 1 | 1.0. | 75 | 1.0. |
| 4 (V) | 0,5 | 1 | 120 | 7,6 | 0 - 1 | 1.0. | 60 | 1.0. |
| 5 | 6 | 50 | 240 | 7,0 | 0 - 1 | 1.0. | 70 | 1.0. |
| 5 (V) | 1,5 | 1 | 120 | 9,4 | 1 - 2 | 1.0. | 60 | 1.0. |
| 6 | 5 | 50 | 240 | 6,8 | 0 - 1 | 1.0. | 75 | 1.0. |
| 6 (V) | 1,5 | 1 | 120 | 6,7 | 0 - 1 | 1.0. | 70 | 1.0. |
| 7 | 15 | 60 | 360 | 5,8 | 1 | 1.0. | 70 | 1.0. |
| 7 (V) | 6 | 24 | 240 | 5,5 | 1 | 1.0. | 60 | 1.0. |
| 8 | 12 | 60 | 240 | 8,9 | 0 - 1 | 1.0. | 75 | 1.0. |
| 8 (V) | 1,5 | 12 | 180 | 8,6 | 0 - 1 | 1.0. | 60 | 1.0. |

Die mit (V) bezeichneten Lacke sind die Vergleichslacke (Mischungen ohne Partialkondensation)

## Ansprüche

1. Verfahren zur Herstellung von Bindemiteln für kathodisch abscheidbare Lacke, auf Basis von nach Protonierung wasserverdünnbaren und durch Umsetzung oder Umamidierung vernetzbaren Acrylcopolymeren, dadurch gekennzeichnet, daß man

(A) 60 - 90 Gew.-%, vorzugsweise 75 bis 85 Gew.-%, eines epoxidgruppenfreien Aminadduktes eines Glycidylgruppen und gegebenenfalls primäre Hydroxylgruppen tragenden Acrylatcopolymeren, wobei die Menge des eingesetzten sekundären Amins so gewählt wird, daß das Verhältnis zwischen den ursprünglichen Glycidylgruppen und den sekundären Aminogruppen zwischen 1 : 0,7 und 1 : 1 liegt und das Endprodukt eine die Wasserverdünnbarkeit des Produktes nach Protonierung gewährleistende Aminzahl von 35 bis 140 mg KOH/g, vorzugsweise von 80 bis 110 mg KOH/g, und welches eine, vorzugsweise auf primären Hydroxygruppen beruhende, Hydroxyzahl von 100 bis 250 mg KOH/g, vorzugsweise von 130 bis 180 mg KOH/g, oder ganz oder anteilig primäre Aminogruppen in einer der Hydroxyzahl äquivalenten Menge aufweist, mit

(B) 10 bis 40 Gew.-%, vorzugsweise 15 bis 25 Gew.%, einer C-H-aktive Estergruppen, vorzugsweise Malonestergruppen enthaltenden, zur Umesterung und/oder Umamidierung befähigten oligomeren oder polymeren Verbindung

bei 100 bis 120°C bis zu einer Grenzviskositätszahl zwischen 8 und 18 ml/g, vorzugsweise zwischen 9 und 15 ml/g, gemessen in CHCl₃ bei 20°C, partiell kondensiert, mit der Maßgabe, daß die Grenzviskositätszahlen der Ausgangsmischung und des Kondensationsproduktes, gemessen in CHCl₃ bei 20°C, sich wie 1 : 1 bis 1 : 1,5 vorzugsweise wie 1 : 1,01 bis 1 : 1,25, verhalten und die Grenze einer einwandfreien Löslichkeit des protonierten Kondensationsproduktes nicht überschritten wird.

2. Verfahren nach Anspruch 1, dadurch gekennzeichnet, daß man für die Bindemittelkomponente (A) als Amine Dialkanolamine und/oder primäre und sekundäre Aminogruppen enthaltende Polyamine, deren primäre Aminogruppen als Ketimine blockiert sind, einsetzt.

3. Verfahren nach den Ansprüchen 1 und 2, dadurch gekennzeichnet, daß man als Bindemittelkomponente (A) ein Acrylatcopolymeres einsetzt, welches durch Umsetzung des Glycidyl(meth)acrylats mit Aminen und anschließend Copolymerisation erhalten wurde.

4. Verfahren nach Anspruch 1, dadurch gekennzeichnet, daß man als Bindemittelkomponente (B) ein partielles Di-oder Polyolumesterungsprodukt eines KNOEVENAGEL-Reaktionsproduktes aus Diethylmalonat und Formaldehyd einsetzt.

5. Verfahren nach Anspruch 4, dadurch gekennzeichnet, daß man als Bindemittelkomponente (B) ein mit 30 bis 40 Mol-% Propylenglykol-1,3 kondensiertes Reaktionsprodukte aus Diethylmalonat und Formaldehyd einsetzt.

6. Bindemittel, hergestellt nach den Ansprüchen 1 bis 5.

7. Verwendung der nach den Ansprüchen 1 bis 5, hergestellten Bindemittel in kathodisch abscheidbaren Lacken für dekorative, pigmentierte oder nichtpigmentierte Einschichtlackierungen und hellfarbige Grundierungen auf metallischen Untergründen.